# NEUE EUROPÄISCHE PATENTSCHRIFT

(11) **EP 1 706 448 B2**
(45) Veröffentlichungstag und Bekanntmachung des Hinweises auf die Entscheidung über den Einspruch: **07.09.2016**
(45) Hinweis auf die Patenterteilung: 29.04.2009
(21) Anmeldenummer: 05706956.9
(22) Anmeldetag: 21.01.2005
(51) Int. Cl.: C08K 3/00, C08L 33/12, E03C 1/18

(54) **GIESSMASSE, INSBESONDERE FÜR DIE HERSTELLUNG VON KÜCHENSPÜLEN, SANITÄRFORMKÖRPERN, KÜCHENARBEITSPLATTEN ODER DERGLEICHEN**
CASTING MASS IN PARTICULAR FOR THE PRODUCTION OF KITCHEN SINKS, MOULDED SANITARYWARE, KITCHEN WORKTOPS OR SIMILAR
MASSE DE COULEE, EN PARTICULIER POUR LA FABRICATION D'EVIERS DE CUISINE, D'ELEMENTS SANITAIRES MOULES, DE PLANS DE TRAVAIL DE CUISINE OU ANALOGUES

(30) Priorität: 23.01.2004 DE 102004004510
(43) Veröffentlichungstag der Anmeldung: 04.10.2006
(73) Patentinhaber: BLANCO GmbH + Co KG, 75038 Oberderdingen (DE)
(72) Erfinder: GILDENPFENNIG, Anja, 75031 Eppingen-Mühlbach (DE); HAJEK, Andreas, 74336 Brackenheim (DE); HECK, Thomas, 74858 Aglasterhausen (DE)
(74) Vertreter: Hoeger, Stellrecht & Partner Patentanwälte mbB
(86) Internationale Anmeldenummer: PCT/EP2005/000592
(87) Internationale Veröffentlichungsnummer: WO 2005/071000

(56) Entgegenhaltungen:
- EP-A- 0 716 097
- EP-A- 1 207 180
- EP-A2- 1 153 731
- WO-A-95/23825
- DE-A1- 4 304 494
- US-A- 4 221 697
- US-A- 4 413 089
- US-A- 5 218 013
- Web extract showing specific density of cristobalite (www.mindat.org)
- Web extract showing specific density of Rutile TiO² (Wikipedia "Rutile")
- Wikipedia-Artikel "Gebrochene Mineralstoffe"

## Beschreibung

Die Erfindung betrifft eine Gießmasse, insbesondere für die Herstellung von Küchenspülen, Sanitärformkörpern, Küchenarbeitsplatten oder dergleichen, umfassend einen auf einem Acrylatmonomer basierenden Sirup sowie ein anorganisches Füllstoffmaterial, welches einen Anteil von 45 bis 85 Gew.-% an der Gießmasse aufweist. Die Erfindung betrifft des Weiteren unter Verwendung solcher Gießmassen hergestellte Küchenspülen, Sanitärformkörper und Küchenarbeitsplatten.

Solche Formteile sind in der Regel erheblichen abrasiven sowie Temperaturbeanspruchungen unterworfen, sodass Abrasionsfestigkeit sowie die Festigkeit gegenüber Heiß-Kalt-Zyklen von fundamentaler Bedeutung sind. Aus der EP 0 361 101 A1 ist bekannt. Füllstoffmaterialien in solchen Gießmassen zu verwenden, welche eine ungebrochene Komform aufweisen. Da mit diesen Füllstoffpartikeln nicht nur gute Fließeigenschaften für die Gießmasse selbst, und damit eine Erleichterung bei der Herstellung der Formkörpern erzielt wird, sondern darüber hinaus auch noch die Möglichkeit besteht, relativ hohe Packungsdichten der Füllstoffpartikel in der umgebenden Acrylatmatrix zu erzielen, eine der Hauptvoraussetzungen für eine gute Abrasionsfestigkeit des Formkörpers, sind solche Gießmassen vielfältig im Einsatz.

In der Praxis hat sich nun immer wieder herausgestellt, dass insbesondere bei anspruchsvolleren Formen der herzustellenden Formkörper so genannte Fließlinien am fertigen Bauteil auftreten. Dies gilt beispielsweise für Küchenspülen mit Doppelbecken oder aber auch Formkörper mit größeren unstrukturierten Flächen, wie z.B. unstrukturierten Abtropfflächen von Küchenspülen oder auch für Küchenarbeitsplatten. Man versteht unter Fließlinien eine durch den Befüllvorgang hervorgerufene, visuell wahmehmbare und damit störende Vorzugsorientierung der Füllstoffpartikel in Fließrichtung der Gießmasse. Eine solche störende Vorzugsorientierung erhält man auch dann, wenn als Füllstoffpartikel die in der EP 0 361 101 vorgeschlagenen ungebrochenen Komformen verwendet werden, die ja ein geringes Aspektverhältnis aufweisen und somit eigentlich eher unanfällig gegenüber einer Vorzugsorientierung beim Fließen der Gießmasse sein sollten.

Je nach Grad der Ausprägung dieser Fließlinien gelten insbesondere Küchenspülen oder Arbeitsplatten gemäß definierten Qualitätsmerkmalen als nicht mehr verkaufsfähig und müssen demnach ausgesondert und entsorgt werden.

Darüber hinaus entstehen bei den eingangs beschriebenen Gießmassen immer wieder Probleme damit, dass insbesondere bei hohen Füllstoffanteilen Lochbildungen in der Nähe der Oberfläche auftreten, die ebenfalls dazu führen dass Küchenspülen bzw. Formkörper aus solchen Gießmassen als nicht mehr verkaufsfähig gelten müssen.

Aus der EP 1207180 A1 ist eine insbesondere zur Herstellung von Sanitärformkörpem geeignete Gießmasse bekannt, welche einen ein Acrylat-Monomer umfassenden Sirup, Wollastonit als Additiv und einen von Wollastonit verschiedenen anorganischen Füllstoff umfasst.

In der WO 95/23825 sind aus Gießmassen herstellbare Kunststofffiormteile mit einer mit einem anorganischen Füllstoff gefüllten Kunststoffmatrix offenbart, wobei der Füllstoff zwei Füllstofffraktionen (a) und (b) umfasst, wobei die Füllstofffraktion (a) eine Korngrößenverteilung aufweist, bei der 98 Gew.-% der Partikel eine Korngröße ≤ 150 µm aufweisen, und im Wesentlichen gleichmäßig in der Kunststoffmatrix verteilt vorliegt, und wobei die Kunststofffraktion (b) Partikel mit einer Partikelgröße von ca. 300 µm bis ca. 3000 µm umfasst und der Anteil der Füllstofffraktion (b) in einer Oberflächenrandschicht des Formteils auf mindestens 30 Gew.-%, bezogen auf die Gesamtmasse der gefüllten Matrix, angereichert ist.

In der DE 43 04 494 A1 ist eine Gießmasse zur Herstellung von Kunststoffformteilen beschrieben, welche neben einer flüssigen monomeren Acrylatkomponente einen Anteil eines partikelförmigen Kunststoffmaterials und einen Anteil eines partikelförmigen anorganischen Materials enthält.

In der US 4,413,089 ist eine Mischung zur Herstellung von Gegenständen aus Polymethylmethacrylat offenbart, welche polymerisierbares Methylmethacrylat, Aluminiumtrihydrat und Eisenoxidpigmente umfasst.

Aufgabe der vorliegenden Erfindung ist es, die mit vorgenannten Fehlermerkmalen in Verbindung stehende Ausschussquote bei der Herstellung von Formkörpern, insbesondere bei Küchenspülen, Sanitärformkörpern und Küchenarbeitsplatten, zu reduzieren und dementsprechend eine hierfür geeignete Gießmasse vorzuschlagen.

Diese Aufgabe wird durch eine Gießmasse gemäß Anspruch 1 gelöst.

Die erste Füllstofffraktion besteht vorzugsweise aus Füllstoffpartikeln mit einer spezifischen Dichte ≤ 2,8 9/cm³ und die zweite Füllstofftraktion besteht aus Füllstoffpartikeln mit einer spezifischen Dichte ≥ 3,3 g/cm³.

Erstaunlicherweise findet man bei der Verwendung der erfindungsgemäß zu verwendenden zwei Füllstofffraktionen, wobei die eine Füllstofffraktion die ungebrochene Komform der Füllstoffpartikel aufweist, wie sie in der EP 0 361 101 empfohlen werden, und die zweite Füllstofffraktion eine größere spezifische Dichte aufweist, dass sich der Anteil der hergestellten Formkörpern, die ausgeprägte Fließlinien aufweisen, stark zurückdrängen, wenn nicht ganz vermeiden lässt.

Dabei werden für die erste Füllstofffraktion Partikel mit einer mittleren Partikelgröße im Bereich von 100 bis 2000 µm verwendet, wie dies bereits in der EP 0 361 101 beschrieben ist, und mit denen bekanntermaßen viele sehr gute Eigenschaften der erhaltenen Formkörpern zusammenhängen. Diese prositiven Eigenschaften der erhaltenen Formkörper bleiben auch bei der Verwendung der Gießmasse gemäß vorliegender Erfindung erhalten.

Die zweite Füllstofffraktion weist vorzugsweise Partikel mit einer mittleren Partikelgröße auf, die im Bereich 1 bis 2000 µm, bevorzugt 10 bis 1000 µm, weiter bevorzugt 50 bis 500 µm liegen.

Die größere spezifische Dichte der Partikel der zweiten Füllstofffraktion führt zu einem Absetzverhalten dieser Partikel in der Gießmasse, welches der Ausbildung von Fließlinien entgegenwirkt

Der Unterschied in der spezifischen Dichte der beiden Füllstoftfraktionen, der notwendig ist, um ein ausreichend verschieden ausgeprägtes Sedimentationsverhalten der Partikel der Füllstofffraktionen zu gewährleisten, hängt zum einen von der spezifischen Dichte der Partikel der ersten Füllstofffraktion ab und des Weiteren von der Viskosität der Gießmasse.

Die Viskosität der Gießmasse wird in der Regel so eingestellt, dass die Sedimentationsneigung der Partikel der Füllstofftraktionen für die Befüllung der Gießform ausreichend gehemmt wird und sich die Gießmasse somit gut verarbeiten lässt. Andererseits wird fürbestimmte Dekore ein Anreichern der Füllstoffe auf der Sichtseite des Formkörpers gewünscht Einfluss auf die notwendige Viskosität nimmt auch die Komform der Partikel sowie die Partikelgröße.

Häufig werden Gießmassen auf eine Viskosität von ca. 4 Pas bis ca. 7 Pas eingestellt, wenn mit silikatischen Füllstoffen (spezif. Dichte ca. 2,65 g/cm³) mit ungebrochener Kornform und mittleren Partikelgrößen von 50 µm bis 800 µm als Material der ersten Füllstofffraktion gearbeitet wird.

Bei der erfindungsgemäßen Verwendung von Partikeln der zweiten Füllstofffraktion, welche eine gebrochene Komform aufweisen, bringt ein. Dichteunterschied von 0,5 g/cm³ in den spezifischen Dichten von erster und zweiter Füllstofffraktion schon deutliche Unterschiede im Sedimentationsverhalten, Insbesondere bei vergleichsweise niederviskos eingestellten Gießmassen.

Größere Dichteunterschiede unterstützen diesen Effekt Sobald die Gießform nach der Befüllung mit der Gießmasse so gedreht ist, dass die Sichtseite des Formkörpers nach unten weist, beginnt eine Absetzbewegung der Füllstoffe, wobei das unterschiedlich rasche Absinken der ersten und zweiten Füllstofffraktionen ein "Durchkämmen" der stehenden Gießmasse bewirken und dadurch dem Problem der Fließlinien entgegenwirkt.

Bevorzugt liegt die spezifische Dichte der Partikel der zweiten Füllstofffraktion bei 4 g/cm³ und mehr, weiter bevorzugt bei 5 g/cm³ und mehr.

Je größer der Unterschied in der spezifischen Dichte, desto ausgeprägter ist der Effekt der Verhinderung von Fließlinien.

Die zweite Füllstofffraktion ist aus Partikeln mit gebrochener Komform ausgewählt, so dass dieser Effekt weiter gesteigert ist.

Darüber hinaus beobachtet man bei der erfindungsgemäßen Verwendung der beiden Füllstofffraktionen mit unterschiedlicher spezifischer Dichte, dass sich Insbesondere bei hohen Füllstoffgehalten die Tendenz der Lochbildung in der Nähe der Oberfläche zurückdrängen lässt, so dass die Ausschussrate bei Formkörpern mit hohen Füllstoffanteilen zurückgedrängt werden kann.

Höhere Füllstoffanteile wiederum stehen für eine verbesserte Kratzfestigkeit, erhöhte mechanische Widerstandsfähigkeit, geringere Materialkosten, ein verbessertes Kriechverhalten bei Temperaturänderungen und schließlich eine bessere Reinigbarkeit.

Beispiele für Füllstoffmaterialien mit spezifischer Dichte ≤ 2,8 g/cm³ sind die silikatischen Füllstoffe, insbesondere Quarzsand, Glas und dergleichen sowie Aluminiumhydroxid-basierende Füllstoffe.

Beispiele für Füllstoffmaterialien mit spezifischen Dichten ≥3,3 g/cm³ sind Metalloxid-dotierte Glassorten, Metalloxide, beispielsweise Magnetit.

Insbesondere bei dunklen bis schwarzen Farbeinstellungen der Formkörper eignen sich Magnetitpartikel, die mit splittriger, gebrochener Kornform erhältlich sind.

Überraschenderweise setzt der Effekt der Zurückdrängung bzw. der Verminderung der Ausprägung der Fließlinien bereits bei relativ geringen Anteilen der zweiten Füllstofffraktion am Gesamtgehalt des Füllstoffmaterials ein. So erzielt man bereits sehr gute Effekte, wenn das Verhältnis der Gewichtsanteile der ersten zur zweiten Füllstofffraktion bei 20:1 liegt. Andererseits lässt sich der Anteil der Füllstoffpartikel der zweiten Füllstofffraktion auch deutlich höher wählen, ohne dass dies die Eigenschaften der erhaltenen Formkörper, die sonst auf die Füllstofffraktion mit ungebrochener Komform zurückgehen, nennenswert mindern würde.

Bei der erfindungsgemäßen Verwendung von Partikeln mit gebrochener Kornform für die zweite Füllstofffraktion lassen sich zusätzliche optische Effekte bei der Nachbildung von Natursteindekoren in weiten Spielräumen erzielen.

Eine bevorzugte obere Grenze im Verhältnis der Gewichtsanteile der ersten zur zweiten Füllstofffraktion liegt bei einem Verhältnis 2:1.

Der erstaunliche Effekt, der mit dem Zumischen von Füllstoffpartikeln mit einer höheren spezifischen Dichte ≥ 3,3 g/cm³ erzielt wird, findet auch Ausdruck in der folgenden Bemessungsregel. Deutliche Effekte erzielt man bereits, wenn der Anteil derzweiten Füllstofffraktion an der Gesamtheit der Gießmasse 2 Gew.-% beträgt. Dieser kann problemlos gesteigert werden bis 40 Gew.-% oder mehr, ohne dass positive Eigenschaften der Formkörper dadurch nennenswert in Mitleidenschaft gezogen würden.

Vor allem im Bezug auf die anzustrebende Prozesssicherheit und insbesondere die Zurückdrängung der Fließlinien als auch der Lochbildung, werden bevorzugt 3 bis 25 Gew.-% derzweken Füllstofffraktion an der Gesamtheit der Gießmasse verwendet. Mit Anteilen im Bereich von 5 bis 15 Gew.-% der zweiten Füllstofffraktion an der Gesamtheit der Gießmasse wurden die besten Ergebnisse erzielt.

Der in der erfindungsgemäßen Gießmasse verwendete Sirup, der auf einem Acrylatmonomer basiert, umfasst Monomere wie Methacrylatmonomere, Methylmethacrylatmonomere und andere, wie sie beispielsweise dem deutschen Patent DE 24 49 656 auch zu entnehmen sind.

Der Sirup kann einerseits das Monomer und in dem Monomer aufgelöstes Präpolymer enthalten, welches zur Einstellung der Viskosität der Gießmasse einerseits und dem Vermindern eines sonst beim Aushärten von Acrylatmonomeren zu beobachtenden Schrumpfes dient, wobei ein Anteil von Präpolymer im Bereich von 20 bis 25 % bezogen auf den Sirup häufig zu den besten Resultaten führt.

Die Verwendung von Präpolymeren aufgelöst in den Monomeren hat allerdings den Nachteil, dass ein relativ langwieriger Auflöseprozess erforderlich ist, dersich auch durch eine Erhöhung der Temperatur nicht drastisch verkürzen lässt.

Alternativ ist deshalb vorgeschlagen worden, und dies lässt sich auch im Falle der vorliegenden Erfindung realisieren, einen im Wesentlichen aus dem reinen Monomeren bestehenden Sirup zu verwenden und der Gießmasse dann jedoch organische Füllstoffpartikel zuzumischen, die unter Quellen Acrylatmonomer aufnehmen können und so der Modifikation der Viskosität der Gießmasse dienen. Auch hier kann dem Schrumpf beim Aushärten des Acrylatmonomeren wirksam begegnet werden.

In der Regel werden zu diesem Zweck mindestens ca. 8 Gew.-% der organischen Füllstoffpartikel, bezogen auf die Gießmasse eingesetzt

Erfahrungsgemäß können auch bei der erfindungsgemäßen Gießmasse organische Füllstoffpartikel bis zu 40 Gew.-%, bezogen auf die gesamte Gießmasse verwendet werden, sodass die Viskosität der Gießmasse insgesamt auch bei unterschiedlichen Anteilen von Füllstoffen ausreichend gesteuert werden kann.

Die organischen Füllstoffpartikel bestehen bevorzugt aus gefülltem und/oder ungefüllten, mindestens teilweise vernetzten Polyacrylaten.

Werden höhere Gehalte an organischen Füllstoffpartikeln in der Rezeptur verwendet, dann kommen bevorzugt solche aus gefüllten Kunststoffmaterialien zum Einsatz.

Die für die gefüllten Kunststoffmaterialien verwendeten Füllstoffe sind insbesondere anorganische partikelförmige Füllstoffe, deren Gewichtsanteil dem Anteil des anorganischen Füllstoffmaterials der Gesamtrezeptur zugerechnet wird.

Genauso gut ist selbstverständlich vorstellbar geringere Anteile an Präpolymer in dem Monomer zu lösen, was bereits eine deutliche Ersparnis in der Auflösezeit bringt, und weitere Anpassungen der Viskosität über die Verwendung von organischen Füllstoffpartikeln durchzuführen.

Im Sinne der Farbgebung der erfindungsgemäß herzustellenden Formteile werden die Partikel der ersten Füllstofffraktion bevorzugt an ihrer Oberfläche mindestens teilweise eine Farbbeschichtung aufweisen.

Die Erfindung betrifft ferner Küchenspülen, welche unter Verwendung einer Gießmasse wie zuvor beschrieben hergestellt worden sind. Die Erfindung betrifft weiter Sanitätformkörper, die unter Verwendung einer Gießmasse wie zuvor beschrieben hergestellt worden sind. Die Erfindung betrifft schließlich Küchenarbeitsplatten, welche unter Verwendung einer Gießmasse wie zuvor beschrieben hergestellt worden sind.

All diesen Formkörpern ist gemein, dass sie sich mit einem deutlich verminderten Ausschuss herstellen lassen, wobei bei Küchenspülen insbesondere solche Spülen mit zwei eingeformten Becken und/oder unstrukturierten Abtropfflächen der größte Effekt bei der Zurückdrängung der Ausschussquote erzielt wird. Die Probleme bei Sanitärformkörpem und Küchenarbeitsplatten leiten sich analog von der zuvor beschriebenen Problematik ab, d.h. bei Sanitärformkörpem mit relativ komplexer Gestalt wird eine besonders deutliche Reduzierung in der Ausschussquote erzielt, da gerade bei diesen Formteilen die Ausschussquote mit den herkömmlichen Gießmassen höher ist als bei einfachen Formkörpern.

Bei Küchenarbeitsplatten wird das Problem entsprechend den unstrukturierten Abtropfflächen der Küchenspülen zurückgedrängt, sodass der Einsatz der erfindungsgemäßen Gießmasse auch bei der Herstellung von Küchenarbeitsplatten von besonderer Bedeutung ist.

Insgesamt erhält man eine Reduktion bis eine völlige Vermeidung des Fehlermerkmals Fließlinien. Des Weiteren wird sogar eine Verbesserung des Fließverhaltens der Gießmasse erzielt, was in kürzeren Befüllzeiten der Gießformen resultiert.

Falls gewünscht kann ein deutlich höherer Füllgrad, d.h. ein höherer Anteil der anorganischen Füllstoffmaterialien an der Gießmasse verwendet werden.

Ferner findet eine Reduktion bzw. eine Aufhebung des Fehlers der Löcherbildung statt.

Nicht zuletzt wird noch positiv beobachtet, dass auch der Restmonomerengehalt deutlich abgesenkt werden kann.

Diese und weitere Vorteile der Erfindung werden im folgenden anhand der Beispiel noch näher erläutert.

Bei den Beispielen wird als Formkörper eine Küchenspüle mit Granitoptik hergestellt mit einem Becken sowie einer unstrukturierten Abtropffläche, d.h. einer Formgestaltung, die sehr anfällig für Fließlinienbildung ist

Die überprüfung bei den folgenden Beispielen und Vergleichsbeispielen auf Fließlinien erfolgt rein optisch ebenso das Auftreten von so genannten Löchern.

Die Bestimmung des Restmonomergehalts wird wie folgt vorgenommen:
Das in dem Formkörper enthaltene Restmonomer wird durch Zertrümmern des Formkörpers und anschließendes Lösen bzw. Anquellen der Probe in Dichlormethan herausgelöst. Durch die Zugabe von n-Oktan als interner Standard lässt sich der Restmonomergehalt mit dem Gaschromatographen quantitativ bestimmen.

### Vergleichsbeispiel 1:

27 Gewichtsteile Polymersirup (MMA/PMMA mit ca. 20 % Präpolymeranteil)
0,5 Gewichtsteile eines üblichen Vernetzungsmittels
0,5 Gewichtsteile üblicher peroxidischer Katalysatoren
69 Gewichtsteile silanisierte, unterschiedlich gefärbte, ungebrochene Quarzsande mit folgenden Hauptfraktionen:
   30 Gewichtsteile mit einer Partikelgröße von 0,1 - 0,6 mm (Oberfläche schwarz beschichtet)
   13 Gewichtsteile mit einer Partikelgröße von 0,3 - 0,8 mm (Oberfläche schwarz beschichtet)
   26 Gewichtsteile mit einer Partikelgröße von 0,06 - 0,3 mm (natur)
0,1 Gewichtsteile eines üblichen Formtrennmittels, beispielsweise Stearinsäure 3 Gewichtsteile üblicher Pigmente zur Beeinflussung der Farbtönung

Die Viskosität der Gießmasse wird mit Hilfe von pyrogener Kieselsäure auf ca. 4 bis 7 Pas bei 25 °C eingestellt.

Die Aushärtung in einer Spülenform erfolgt unter folgenden Bedingungen:
Die Gießmasse wird in eine ca. 40 °C warme Gießform (Küchenspülenform) eingefüllt. Die spätere Sichtseite wird innerhalb von 2 bis 3 min auf 103 °C aufgeheizt. Die Rückseite wird erst nach 4 min ebenfalls innerhalb von 2 bis 3 min auf 103 °C aufgeheizt. Die gesamte Zykluszeit, einschließlich der Haltezeit bei 103 °C, beträgt 13 min. Nach dem Abkühlen der hergestellten Küchenspüle wird diese der Form entnommen.

Nachdem die abgegossenen Spülen aus der Form entnommen wurden, wurde eine Fließlinienbildung sowie Oberflächenbereiche mit Lochbildung beobachtet.

Restmonomergehalt: 0,39 %.

### Beispiel 1:

26 Gewichtsteile Polymersirup (MMA/PMMA mit ca. 20 % Präpolymeranteil)
0,5 Gewichtsteile eines üblichen Vernetzungsmittels (wie im Vergleichsbeispiel)
0,5 Gewichtsteile üblicher peroxidischer Katalysatoren (wie im Vergleichsbeispiel)
57 Gewichtsteile silanisierte, unterschiedlich gefärbte, ungebrochene Quarzsande (spezifische Dichte ca. 2,65 g/cm³) mit folgenden Haupttraktionen:
   16 Gewichtsteile mit einer Partikelgröße von 0,1 - 0,6 mm (Oberfläche schwarz beschichtet)
   14 Gewichtsteile mit einer Partikelgröße von 0,3 - 0,8 mm (Oberfläche schwarz beschichtet)
   27 Gewichtsteile mit einer Partikelgröße von 0,06 - 0,3 mm (natur)
15 Gewichtsteile Magnetit mit Partikelgrößenverteilung 50 - 210 µm, mittlere Partikelgröße ca. 150 µm (spezifische Dichte 5,2 g/cm³)
0,1 Gewichtsteile eines üblichen Formtrennmittels, beispielsweise Stearinsäure 1 Gewichtsteil üblicher Pigmente zur Beeinflussung der Farbtönung

Die Viskosität der Gießmasse wird mit Hilfe von pyrogener Kieselsäure auf ca. 4 bis 7 Pas bei 25 °C eingestellt.

Die Aushärtebedingungen waren dieselben wie im Vergleichsbeispiel 1.

Restmonomergehalt: 0,24 %; keine Bildung von Fließlinien, keine Löcher.

### Beispiele 2 und 3:

Bei der Beispielrezeptur des Beispiels 1 werden die Anteile des Magnetitfüllstoffes (mittlere Partikelgröße ca. 150 µm) variiert Die geringeren Gewichtsteile der zweiten Füllstofffraktion wurden durch entsprechend höhere Anteile an Partikeln mit ungebrochener Kornform (Partikelgröße 0,1 - 0,6 mm) kompensiert, sodass stets ein vergleichbarer Gesamtgehalt an Füllstoffmaterial gegeben war. Die erhaltenen Ergebnisse sind in Tabelle 1 zusammengefasst.

Die Viskosität der Gießmasse wird im Beispiel 2 und im Beispiel 3 mit Hilfe von pyrogener Kieselsäure auf ca. 4 bis 7 Pas bei 25 °C eingestellt

Die Aushärtebedingungen waren dieselben wie in Vergleichsbeispiel 1.

**Tabelle 1**

| Beispiel | Gewichtsteile Magnetit | Restmonomergehalt | Fließlinien | Löcher |
|---|---|---|---|---|
| 1 | 15 | 0,24 | nein | nein |
| 2 | 10 | 0,34 | nein | nein |
| 3 | 5 | 0,33 | nein | nein |
| Vergleich 1 | 0 | 0,39 | ja | ja |

### Vergleichsbeispiel 2:

In dieser Testreihe werden Zusammensetzungen geprüft, die sich von den Beispielrezepturen in Beispiel 1 bis 3 ableiten. Anstelle von Magnetitfüllstoff kommen Quarzmehle (spezifische Dichte 2,65 g/cm³) mit gebrochener (splittriger) Komform der Partikelgrößen von 100 - 150 µm und 0,2 - 1 mm zum Einsatz. Die Ergebnisse sind in Tabelle 2 zusammengefasst.

Die Viskosität der Gießmasse wird mit Hilfe von pyrogener Kieselsäure auf ca. 4 bis 7 Pas bei 25 °C eingestellt.

Die Aushärtebedingungen waren dieselben wie in Vergleichsbeispiel 1.

**Tabelle 2**

| Gewichtsteile Partikelgröße 100 - 150 µm | Gewichtsteile Partikelgröße 0,2 - 1 mm | Fließlinien | Löcher |
|---|---|---|---|
| - | 15 | leicht | nein |
| - | 10 | leicht | nein |
| - | 5 | leicht | nein |
| 15 | - | leicht | nein |
| 10 | - | leicht | nein |
| 5 | - | mittelstark | nein |
| 5 | 5 | leicht | nein |
| 2,5 | 2,5 | leicht | nein |
| 1,5 | 1,5 | mittelstark | nein |

Tabelle 2 belegt, dass mit geringen Anteilen einer Füllstofffraktion mit Partikeln mit gebrochener Kornform und gleicher spezifischer Dichte die Löcherbildung vermieden und die Fließlinienbildung vermindert werden kann.

Gegenüber dem - bei dunklen bis schwarzen Farbstellungen - bevorzugten Magnetitfüllstoff mit höherer spezifischer Dichte der Beispiele 1 bis 3 ergeben sich allerdings schlechtere Ergebnisse beim Zurückdrängen der Fließlinien, bzw. die sich auch durch höhere Gehalte der zweiten Füllstofffraktion nicht vollständig ausgleichen lassen.

Bei höheren Füllstoffgehalten als im Vergleichsbeispiel 2 verstärkt sich zum einen die Tendenz zur Ausbildung von Fließlinien, zum anderen wird die Neigung zur Ausbildung von Löchern in der Nähe der Formkörperoberfläche wieder bemerkbar.

## Patentansprüche

1. Gießmasse, insbesondere für die Herstellung von Küchenspülen, Sanitärformkörpern, Küchenarbeitsplatten oder dgl., umfassend einen auf einem Acrylat-Monomer basierenden Sirup sowie ein anorganisches Füllstoffmaterial, welches einen Anteil von 45 bis 85 Gew.-% an der Gießmasse aufweist, **dadurch gekennzeichnet, dass** der Anteil des Füllstoffmaterials eine erste Füllstofffraktion und eine zweite Füllstofffraktion umfasst,
- wobei die erste Füllstofffraktion aus Füllstoffpartikeln mit ungebrochener Kornform und einer mittleren Partikelgröße im Bereich von 100 bis 2000 µm besteht,
- wobei die zweite Füllstofffraktion aus Füllstoffpartikeln mit gebrochener Kornform besteht, deren spezifische Dichte ≥ 3,3 g/cm³ beträgt und größer ist als diejenige der Füllstoffpartikel der ersten Füllstofffraktion, und
- wobei der Gewichtsanteil der ersten Füllstofffraktion größer ist als der Gewichtanteil der zweiten Füllstofffraktion.

2. Gießmasse nach Anspruch 1, **dadurch gekennzeichnet, dass** die mittlere Partikelgröße der Partikel der zweiten Füllstofffraktion im Bereich von 1 bis 2000 µm, bevorzugt 10 bis 1000 µm, weiter bevorzugt 50 bis 500 µm liegt.

3. Gießmasse nach Anspruch 1 oder 2, **dadurch gekennzeichnet, dass** das Verhältnis der Gewichtsanteile der ersten zur zweiten Füllstofffraktion im Bereich von 20:1 bis 2:1 liegt.

4. Gießmasse nach einem der Ansprüche 1 bis 3, **dadurch gekennzeichnet, dass** der Anteil der zweiten Füllstofffraktion an der Gesamtheit der Gießmasse 2 bis 40 Gew.-%, bevorzugt 3 bis 25 Gew.-%, weiter bevorzugt 5 bis 15 Gew.-% beträgt.

5. Gießmasse nach einem der Ansprüche 1 bis 4, **dadurch gekennzeichnet, dass** der Unterschied der spezifischen Dichte der Partikel der ersten und zweiten Füllstofffraktion mindestens 0,5 g/cm³ beträgt.

6. Gießmasse nach Anspruch 5, **dadurch gekennzeichnet, dass** die spezifische Dichte der Partikel der ersten Füllstofffraktion ≤ 2,8 g/cm³ beträgt.

7. Gießmasse nach Anspruch 5 oder 6, **dadurch gekennzeichnet, dass** die spezifische Dichte der Partikel der zweiten Füllstofffraktion ≥ 4,0 g/ cm³ beträgt.

8. Gießmasse nach einem der Ansprüche 1 bis 7, **dadurch gekennzeichnet, dass** die Gießmasse organische Füllstoffpartikel umfasst.

9. Gießmasse nach Anspruch 8, **dadurch gekennzeichnet, dass** der Anteil der organischen Füllstoffpartikel bis zu 40 Gew.-% beträgt, bezogen auf die Gießmasse.

10. Gießmasse nach einem der Ansprüche 1 bis 9, **dadurch gekennzeichnet, dass** die Partikel der ersten Füllstofffraktion an ihrer Oberfläche mindestens teilweise eine Farbbeschichtung aufweisen.

11. Küchenspüle, hergestellt unter Verwendung einer Gießmasse nach einem der Ansprüche 1 bis 10.

12. Sanitärformkörper, hergestellt unter Verwendung einer Gießmasse nach einem der Ansprüche 1 bis 10.

13. Küchenarbeitsplatte, hergestellt unter Verwendung einer Gießmasse nach einem der Ansprüche 1 bis 10.

## Claims

1. Casting mass, in particular, for the production of kitchen sinks, moulded sanitary articles, kitchen worktops or the like, comprising a syrup based on an acrylate monomer as well as an inorganic filler material constituting a proportion of 45 to 85 % by weight of the casting mass, **characterized in that** the proportion of the filler material comprises a first filler fraction and a second filler fraction,
- wherein the first filler fraction consists of filler particles with an unbroken grain shape and an average particle size in the range of 100 to 2,000 µm,
- wherein the second filler fraction consists of filler particles with a broken grain shape, of which the specific density is ≥ 3.3 g/cm³ and is greater than that of the filler particles of the first filler fraction, and
- wherein the weight proportion of the first filler fraction is greater than the weight proportion of the second filler fraction.

2. Casting mass as defined in claim 1, **characterized in that** the average particle size of the particles of the second filler fraction is in the range of 1 to 2000 µm, preferably 10 to 1000 µm, even more preferred 50 to 500 µm.

3. Casting mass as defined in claim 1 or 2, **characterized in that** the ratio of the weight proportions of the first to the second filler fraction is in the range of 20:1 to 2:1.

4. Casting mass as defined in any one of claims 1 to 3, **characterized in that** the proportion of the second filler fraction in the whole of the casting mass is 2 to 40 % by weight, preferably 3 to 25 % by weight, even more preferred 5 to 15 % by weight.

5. Casting mass as defined in any one of claims 1 to 4, **characterized in that** the difference in the specific density of the particles of the first and second filler fractions is at least 0.5 g/cm³.

6. Casting mass as defined in claim 5, **characterized in that** the specific density of the particles of the first filler fraction is ≥ 2.8 g/cm³.

7. Casting mass as defined in claim 5 or 6, **characterized in that** the specific density of the particles of the second filler fraction is
≥ 4.0 g/cm³.

8. Casting mass as defined in any one of claims 1 to 7, **characterized in that** the casting mass comprises organic filler particles.

9. Casting mass as defined in claim 8, **characterized in that** the proportion of the organic filler particles is up to 40 % by weight, in relation to the casting mass.

10. Casting mass as defined in any one of claims 1 to 9, **characterized in that** the particles of the first filler fraction have at least partially a color coating on their surface.

11. Kitchen sink produced with the use of a casting mass as defined in any one of claims 1 to 10.

12. Moulded sanitary article produced with the use of a casting mass as defined in any one of claims 1 to 10.

13. Kitchen worktop produced with the use of a casting mass as defined in any one of claims 1 to 10.

## Revendications

1. Masse de moulage à couler, notamment pour la fabrication d'éviers de cuisine, d'éléments sanitaires moulés, de plans de travail de cuisine ou analogues, comprenant un sirop à base d'un monomère d'acrylate ainsi qu'une matière de charges inorganique, qui présente une part ou proportion de 45 à 85% en poids de la masse de moulage à couler, **caractérisée en ce que** la part de matière de charges englobe une première fraction de charges et une deuxième fraction de charges,
- la première fraction de charges étant constituée de particules de charges à forme de grain non brisée et avec une grosseur de particule moyenne dans une plage de 100 à 2000 µm,
- la deuxième fraction de charges étant constituée de particules de charges à forme de grain brisée, dont la densité spécifique est ≥ 3,3 g/cm³ et est supérieure à celle des particules de charges de la première fraction de charges, et
- la proportion en poids de la première fraction de charges étant supérieure à la proportion en poids de la deuxième fraction de charges.

2. Masse de moulage à couler selon la revendication 1, **caractérisée en ce que** la grosseur de particule moyenne des particules de la deuxième fraction de charges se situe dans une plage de 1 à 2000 µm, de préférence dans une plage de 10 à 1000 µm, plus précisément encore dans une plage de 50 à 500 µm.

3. Masse de moulage à couler selon la revendication 1 ou 2, **caractérisée en ce que** le rapport des proportions de la première à la deuxième fraction de charges se situe dans une plage de 20:1 à 2:1.

4. Masse de moulage à couler selon l'une des revendications 1 à 3, **caractérisée en ce que** la proportion de la deuxième fraction de charges relativement à la totalité de la masse de moulage à couler vaut de 2 à 40% en poids, de préférence de 3 à 25% en poids, et plus précisément encore de 5 à 15% en poids.

5. Masse de moulage à couler selon l'une des revendications 1 à 4, **caractérisée en ce que** la différence de masse volumique des particules de la première et de la deuxième fraction de charges vaut au moins 0,5 g/cm³.

6. Masse de moulage à couler selon la revendication 5, **caractérisée en ce que** la masse volumique des particules de la première fraction de charges est ≤ 2,8 g/cm³.

7. Masse de moulage à couler selon la revendication 5 ou 6, **caractérisée en ce que** masse volumique des particules de la deuxième fraction de charges est ≥ 4,0 g/cm³.

8. Masse de moulage à couler selon l'une des revendications 1 à 7, **caractérisée en ce que** la masse de moulage à couler renferme des particules de charges organiques.

9. Masse de moulage à couler selon la revendication 8, **caractérisée en ce que** la part de particules de charges organiques vaut jusqu'à 40% en poids, relativement à la masse de moulage à couler.

10. Masse de moulage à couler selon l'une des revendications 1 à 9, **caractérisée en ce que** les particules de la première fraction de charges présentent sur leur surface, au moins en partie, un revêtement de couleur.

11. Evier de cuisine fabriqué en utilisant une masse de moulage à couler selon l'une des revendications 1 à 10.

12. Elément sanitaire moulé fabriqué en utilisant une masse de moulage à couler selon l'une des revendications 1 à 10.

13. Plan de travail de cuisine fabriqué en utilisant une masse de moulage à couler selon l'une des revendications 1 à 10.
